(19)

**Europäisches Patentamt**
**European Patent Office**
**Office européen des brevets**

(11)  **EP 4 470 896 A1**

(12)  **EUROPEAN PATENT APPLICATION**

(43) Date of publication:
 **04.12.2024 Bulletin 2024/49**

(51) International Patent Classification (IPC):
 **B62K 25/08** (2006.01)  **F16F 5/00** (2006.01)
 **F16F 9/00** (2006.01)  **F16K 24/00** (2006.01)

(21) Application number: **24179360.3**

(52) Cooperative Patent Classification (CPC):
 **B62K 25/08; F16F 5/00; F16F 9/00; F16K 24/00;**
 F16F 2224/00

(22) Date of filing: **31.05.2024**

(84) Designated Contracting States:
 **AL AT BE BG CH CY CZ DE DK EE ES FI FR GB GR HR HU IE IS IT LI LT LU LV MC ME MK MT NL NO PL PT RO RS SE SI SK SM TR**
 Designated Extension States:
 **BA**
 Designated Validation States:
 **GE KH MA MD TN**

(30) Priority: **31.05.2023 US 202363505398 P**
 **29.05.2024 US 202418677608**

(71) Applicant: **Fox Factory, Inc.**
 **Duluth, GA 30097 (US)**

(72) Inventors:
 • **Becker, William M.**
  **Duluth, 30097 (US)**
 • **Allinger, Wesley E.**
  **Duluth, 30097 (US)**
 • **Brown IV, William O.**
  **Duluth, 30097 (US)**

(74) Representative: **Greaves Brewster LLP**
 **Copa House**
 **Station Road**
 **Cheddar, Somerset BS27 3AH (GB)**

(54)  **AUTOMATIC AIR BLEED ASSEMBLY FOR A FRONT FORK**

(57)  A front fork assembly (100) comprising:

an inner fork tube (140) and an outer fork tube (150), wherein the inner fork tube and outer fork tube are configured to engage telescopically, and wherein the outer fork tube contains an oil bath lubrication within an area thereof;

a seal (265) configured for closing a gap between the inner fork tube (140) and the outer fork tube (150) when they are telescopically engaged, such that the oil bath lubrication within the outer fork tube is prevented from leaking out from the outer fork tube;

a fluid passage (211, 212 ) disposed between an interior of the outer fork tube (140) and an exterior of the outer fork tube, wherein the fluid passage is located below the seal (265); and

an automatic air bleed assembly (205) disposed on the outer fork tube (140), said automatic air bleed assembly comprising:

a housing (405) coupled to the fluid passage (211, 212), said housing comprising at least one bore (455) and at least one orifice (402); and

a material (410) with oleophobic and hydrophobic properties located within said bore.

FIG. 3

EP 4 470 896 A1

**Description**

CROSS-REFERENCE TO RELATED APPLICATIONS

This application claims priority from United States provisional patent application serial number 63/505,398, filed May 31, 2023, and from United States patent application serial number 18/677,608 filed May 29, 2024.

TECHNICAL FIELD

Embodiments of the invention generally relate to a shock assembly, to a front fork assembly, to an automatic air bleed assembly, to a method of manufacturing an outer fork tube, and to a vehicle comprising a front for assembly.

BACKGROUND

Shock assemblies are used in numerous applications. The applications can include vehicles, devices, buildings, and the like. Often, a shock assembly is configured to absorb some or all of a movement that is received at a first location, e.g., the unsprung portion, before it is transmitted to a second location.

During the assembly of a telescopic fork (e.g., a fork having at least one upper tube telescopically coupled with a lower tube) the upper tube is telescopically coupled with the lower tube causing the upper and lower tubes to become a sealed environment. Often, an amount of working fluid and some amount of ambient air is also sealed therein.

In general, the pressure of the ambient air within the sealed environment of the assembled fork will be the same as the pressure of the ambient air at the location of fork assembly. For example, if the fork is assembled at sea level, the pressure of the ambient air sealed within the fork will be approximately 101,325 Pa or 14.7 pounds per square inch (PSI) or 1013.25 millibars.

Deleteriously, after assembly when the fork is taken to ride at a location with lower air pressure, e.g., at high elevation than that of the assembly location, the air pressure within the sealed environment of the assembled fork will no longer be the same as the ambient external air pressure. Instead, the exterior air pressure at the high elevation will be lower. This lack of equilibrium results in a corresponding differential in pressure which will result in added pressure and load to the fork seal creating significantly higher axial friction to the movement of the telescoping suspension fork.

As the foregoing illustrates, what is needed in the art are improved techniques for equalizing ambient pressure within a suspension.

SUMMARY

According to some embodiments there is provided a front fork assembly. The front fork assembly may comprise an inner fork tube and an outer fork tube. The inner fork tube and outer fork tube may be configured to engage telescopically. The outer fork tube may contain an oil bath lubrication within an area thereof. The front fork assembly may comprise a seal configured for closing a gap between the inner fork tube and the outer fork tube when they are telescopically engaged, such that the oil bath lubrication within the outer fork tube may be prevented/inhibited from leaking out from the outer fork tube. The front fork assembly may comprise a fluid passage disposed between an interior of the outer fork tube and an exterior of the outer fork tube. The fluid passage may be located below the seal. The front fork assembly may comprise an automatic air bleed assembly disposed on the outer fork tube. The automatic air bleed assembly may comprise a housing coupled to the fluid passage. The housing may comprise at least one bore and at least one orifice. The automatic air bleed assembly may comprise a material with oleophobic and hydrophobic properties located within said bore.

In some embodiments the material may comprise an air permeable material (or combination of materials) with oleophobic-hydrophobic properties.

In some embodiments the material may comprise an oleophobic material on a side facing the outer fork tube to repel/stop/hinder oil of the oil lubrication bath from coming out through the fluid passage and/or orifice.

In some embodiments the material may comprise a hydrophobic material on a side facing away from the outer fork tube to repel/stop/hinder water from entering into the front fork assembly through the fluid passage and/or orifice.

In some embodiments the material may comprise an open cell foam. In some embodiments, the material may comprise an open cell foam having oleophobic properties and a portion comprising a coating that imparts hydrophobic properties. In some embodiments, the material may comprise an open cell foam having hydrophobic properties and a portion comprising a coating that imparts oleophobic properties.

In some embodiments the material may comprises a combination or composition of materials where an exterior facing side includes a material with hydrophobic properties and a fork-facing side includes a material with oleophobic properties.

In some embodiments the housing may be or comprise a topcap.

In some embodiments the housing may be or comprise an air bleed housing cover.

In some embodiments the housing may be formed into a leg of said outer fork tube and a sealed cap is coupled to said outer fork tube and retained via a retaining ring.

In some embodiments the automatic air bleed assembly may be positioned anywhere between said seal and a top of an oil bath reservoir within said outer fork tube.

In some embodiments the front fork assembly may comprise at least one bushing coupled with the fork. The air bleed assembly and said fluid passage may be located above said at least one bushing.

In some embodiments the front fork assembly may further comprise at least one bushing coupled with the fork. The air bleed assembly and said fluid passage may be located below said at least one bushing.

In some embodiments the automatic air bleed assembly may be configured to prevent/inhibit substantially all liquid outside of the outer fork tube from leaking into the outer fork tube while allowing said air inside the outer fork tube to equalize with air exterior of the outer fork tube.

In some embodiments the automatic air bleed assembly may be or comprise a screw in automatic air bleed assembly.

In some embodiments the automatic air bleed assembly may be or comprise a bolt on automatic air bleed assembly.

In some embodiments the automatic air bleed assembly may further comprise a shim configured to press said material into said bore. The automatic air bleed assembly may further comprise a shim retainer to couple with said bore of said housing and provide a pressure against said shim. The automatic air bleed assembly may further comprise a housing seal to seal said automatic air bleed assembly with said outer fork tube about said fluid passage.

In some embodiments the automatic air bleed assembly may further comprise an oil seepage valve. The oil seepage valve may be coupled between said shim and said shim retainer. The oil seepage valve may comprise a flexible feature on a shim retainer facing side to provide an amount of compressibility to mitigate manufacturing discrepancies. The oil seepage valve may comprise a fluid passage blocking feature configured to leave a gap between itself and the bleed orifice of said shim while said suspension fork is at rest and block said bleed orifice of said shim when said suspension fork is compressed or going through a compression stroke.

In some embodiments the fluid passage blocking feature may be or comprise a cantilever feature.

In some embodiments the fluid passage blocking feature may be or comprise a dome with an opening therethrough. The opening may be offset from a center of said dome.

In some embodiments the flexible feature may be selected from at least one member of a group consisting of: bumps, legs, feet, posts, waves, and other geometric shapes.

In some embodiments the automatic air bleed assembly may further comprise a waterproof material disposed into a surrounding frame. The waterproof material may be located within said at least one bore of said housing.

In some embodiments the automatic air bleed assembly may further comprise a waterproof material insert molded into a surrounding frame. The waterproof material may be located within said at least one bore of said housing.

In some embodiments the at least one orifice may be or comprise a pin hole size orifice.

In some embodiments the may be no clocking required for any components of said automatic air bleed assembly.

In some embodiments the air bleed housing cover may further comprise at least one vent or at least one orifice or a combination thereof located at a bottom surface of the air bleed housing cover.

In some embodiments the automatic air bleed assembly may further comprise an air bleed seal.

In some embodiments the front fork assembly may be a suspension fork or a shock absorber, such as a bicycle fork, a motorcycle fork, a moped fork, or the like.

According to some embodiments there is provided an automatic air bleed assembly. The automatic air bleed assembly may comprise a housing coupled to a fluid passage. The housing may comprise at least one bore and at least one orifice. The automatic air bleed assembly may comprise a material with oleophobic and hydrophobic properties located within said bore.

In some embodiments the housing may be or may comprise a topcap.

In some embodiments the housing may be or may comprise an air bleed housing cover.

According to some embodiments there is provided a method for normalizing pressure. The method may comprise forming an air bleed assembly such that there is an air passage through an outer fork tube. The method may comprise providing an automatic air bleed assembly disposed on the outer fork tube and covering said air passage. The automatic air bleed assembly may comprise a housing coupled to the fluid passage. The housing may comprise at least one bore and at least one orifice. The automatic air bleed assembly may comprise a material with oleophobic and hydrophobic properties located within said bore.

According to some embodiments there is provided an air bleed system for a suspension fork or shock absorber. The air bleed system may comprise a fluid passage between an interior of the suspension and an exterior of the suspension. The air bleed system may comprise an air bleed assembly fluidically coupled with said fluid passage. The air bleed assembly may restrict, at a first rate, air from passing therethrough during normal use of said suspension fork. The air bleed assembly may restrict, at a second rate, air from passing therethrough during when said suspension fork is not in use. The first rate may be more restrictive than said second rate.

According to some embodiments there is provided a vehicle comprising a front fork assembly as set out above, or as described or claimed anywhere herein. The vehicle may be of any kind that uses a front fork assembly, such as a two-wheeled vehicle including a bicycle (e.g. having a front suspension), motorcycle, moped, etc.

Throughout the description and claims of this specification, the words "comprise" and "contain" and variations of the words, for example "comprising" and "comprises", mean "including but not limited to", and do not exclude other components, integers or steps. Moreover the singular encompasses the plural unless the context otherwise requires: in particular, where the indefinite article is used, the specification is to be understood as contemplating plurality as well as singularity, unless the context requires otherwise.

Preferred features of each aspect of the invention may be as described in connection with any of the other aspects. Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible.

BRIEF DESCRIPTION OF THE DRAWINGS

Figure 1A is a perspective view of a fork with an automatic air pressure equalizer, in accordance with an embodiment.

Figure 1B is a front section view of the lower tube legs of the fork with at least one opening for the automatic air pressure equalizer, in accordance with an embodiment.

Figure 2 is a perspective view of the lower fork assembly, in accordance with an embodiment.

Figure 3 is a side section view of an upper portion of the lower fork assembly, in accordance with an embodiment.

Figure 4A is an exploded view of the automatic air bleed valve of Figure 3, in accordance with an embodiment.

Figure 4B is a top view of the automatic air bleed valve of Figure 3, in accordance with an embodiment.

Figure 4C is a side section view of the automatic air bleed valve of Figure 4B, in accordance with an embodiment.

Figure 5A is an exploded view of the automatic air bleed valve of Figure 3 with an additional and optional oil seepage valve, in accordance with an embodiment.

Figure 5B is a side section view of the automatic air bleed valve with the optional oil seepage valve, in accordance with an embodiment.

Figure 5C is a top perspective view of the oil seepage valve, in accordance with an embodiment.

Figure 5D is a bottom perspective view of the oil seepage valve, in accordance with an embodiment.

Figure 6A is a side section view of the automatic air bleed valve with an optional oil seepage valve, in accordance with an embodiment.

Figure 6B is a top perspective view of the optional oil seepage valve, in accordance with an embodiment.

Figure 6C is a bottom perspective view of the optional oil seepage valve, in accordance with an embodiment.

Figure 7A is an exploded front perspective view of an automatic air bleed valve, in accordance with an embodiment.

Figure 7B is an exploded rear perspective view of the automatic air bleed valve of Figure 7A, in accordance with an embodiment.

Figure 7C is a section view of the automatic air bleed valve configuration of Figure 7A, in accordance with an embodiment.

Figure 8A is a perspective view of the air bleed housing cover with one or more large vents, in accordance with an embodiment.

Figure 8B is a perspective view of the air bleed housing cover with at least one small orifice, in accordance with an embodiment.

The drawings referred to in this description should be understood as not being drawn to scale except if specifically noted.

DETAILED DESCRIPTION

Reference will now be made in detail to embodiments of the present technology, examples of which are illustrated in the accompanying drawings. While the technology will be described in conjunction with various embodiment(s), it will be understood that they are not intended to limit the present technology to these embodiments. On the contrary, the present technology is applicable to alternative embodiments, modifications and equivalents, which may be included within the spirit and scope of the invention as defined by the appended claims.

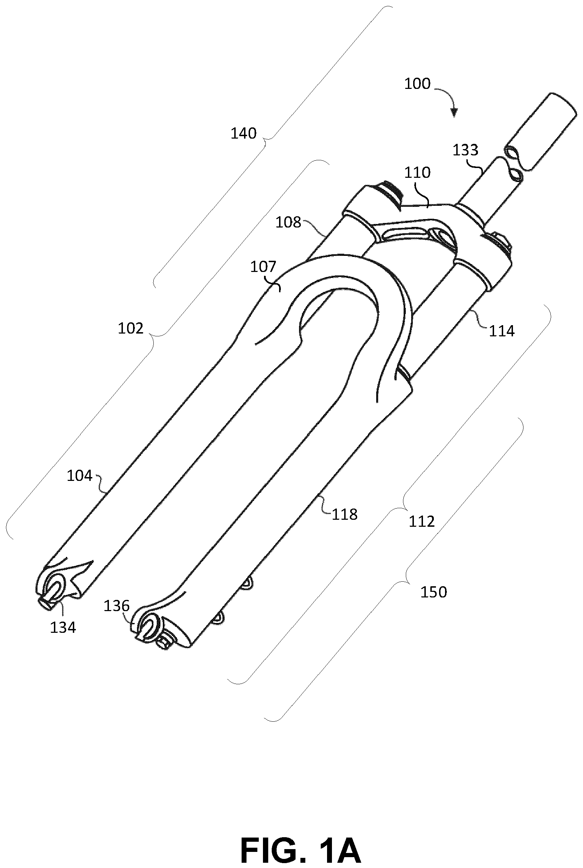

One embodiment hereof comprises a shock absorber for a vehicle. In one embodiment, the vehicle is a bicycle. The shock absorber, for example, a fork 100 as shown in Figure 1A. In general, the fork 100 will include a damper. The damper may be fixed, manually adjustable, semi-active, active (e.g., automatically adjustable), or the like. The fork 100 may include positive and negative spring mechanisms, position sensitive damping mechanisms, inertia valve mechanisms, or the like.

U.S. Patent No. 6,135,434, to which reference is specifically made, shows certain variations of positive and negative spring mechanisms. Another selectively variable damping mechanism is shown in U.S. Patent No. 6,360,857, to which reference is specifically made.

U.S. Patent Nos. 6,415,895, 6,296,092, 6,978,872 and 7,308,976, to each of which reference is specifically made, show certain variations of position sensitive damping mechanisms. Additional position sensitive damping mechanism are shown in U.S. Patent Nos. 7,374,028, and 5,190,126, to which reference is specifically made.

U.S. Patent Nos. 6,581,948, 7,273,137, 7,261,194, 7,128,192, and 6,604,751, to each of which reference is specifically made, show certain variations of inertia valve mechanisms for controlling aspects of compression damping. A shock absorber or fork may be equipped, for example, with an inertia valve for controlling an aspect of damping and a position sensitive valve for controlling another aspect of damping.

With reference now to Figure 1A, a fork 100 is shown in accordance with an embodiment. In one embodiment, fork 100 is a bicycle fork. However, in another embodiment, fork 100 is a motorcycle fork, moped fork, or the like.

In one embodiment, fork 100 includes right leg 102 and left leg 112, respectively, as referenced by a person in a riding position on the bicycle. Fork 100 will often include an upper fork assembly 140 and a lower fork assembly 150. In a normal configuration, the upper fork assembly 140 will telescopically move within the lower fork assembly 150, e.g., an inner (upper fork assembly 140) and an outer (lower fork assembly 150). In an inverted fork assembly, the upper fork assembly 140 will telescopically move outside of the lower fork assembly 150, e.g., an outer (upper fork assembly 140) and an inner (lower fork assembly 150). In an inverted fork assembly, in one embodiment, an automatic air bleed assembly may be located in a top cap assembly of a spring and/or a damper system (for example, it may be integrated into the top cap assembly of a spring and/or a damper system, or it may be bolted on to the top cap assembly). In another embodiment of an inverted fork, an automatic air bleed assembly may be located in the outer fork assembly 140 (for example, it may be integrated into or bolted on to the outer fork assembly) The upper fork assembly 140 includes a crown 110 coupling a right upper fork tube 108 with a left upper fork tube 114. In addition, the crown 110 supports a steerer tube 133, which passes through, and is rotatably supported by, a frame of the vehicle. The steerer tube 133 provides a means for connection of the handlebars to the fork 100.

The lower fork assembly 150 includes each of the right lower tube 104 and the left lower fork tube 118. In one embodiment, a fork arch 107 is used to couple the right lower tube 104 and the left lower fork tube 118 to provide strength and minimize twisting thereof. In one embodiment, each of the right lower tube 104 and the left lower fork tube 118 also include dropouts 134 and 136, respectively, for coupling a front wheel with the fork 100 via a front axle.

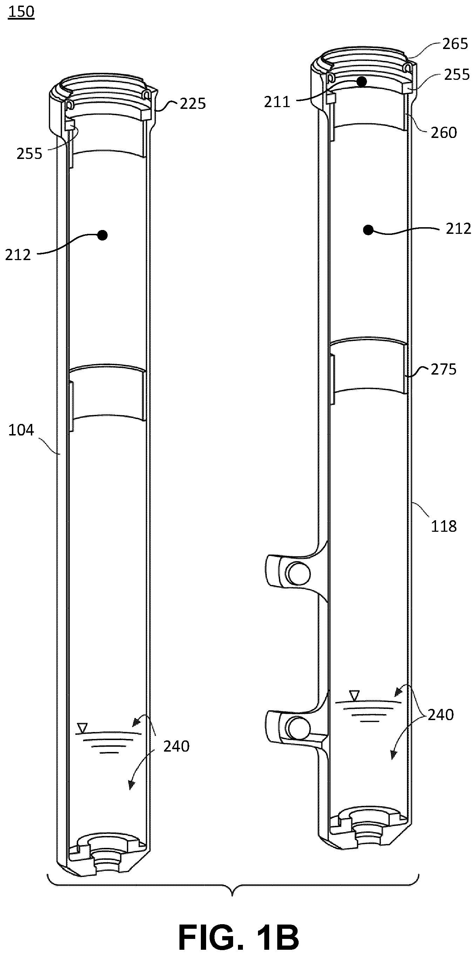

With reference now to Figure 1B, a side section view of the right lower fork tube 104 and left lower fork tube 118 of lower fork assembly 150 are shown. In one embodiment, there is an oil bath 240 located in one or both of right lower fork tube 104 and left lower fork tube 118. In normal orientation, the resting location of oil bath 240 is typically in the lower portion of the lower tubes (such as below the lower bushing 275) due to gravity. In one embodiment, oil bath 240 consists of approximately $2 \times 10^{-5}$ - $5 \times 10^{-5}$ $m^3$ (20 - 50cc) of oil. However, it should be appreciated that other embodiments are able to utilize other amounts of oil for the oil bath 240.

In one embodiment, an opening 211 and/or opening 212 extends completely through from the outer surface of right lower fork tube 104 (and/or left lower fork tube 118) to and through the inner surface of right lower fork tube 104 (and/or left lower fork tube 118) to enable air to travel between the interior of right lower fork tube 104 (and/or left lower fork tube 118) and the surrounding ambient environment.

In one embodiment, opening 211 is located proximate the lower leg seal 265 such as, by the upper bushing 260 or behind foam ring 255. Opening 211 is in communication with the gas (e.g., air) within the lower tube while the bulk of the oil bath 240 is located there below.

In another embodiment, the opening 211 is located elsewhere on one or both of the lower fork tubes, such as, for example, anywhere between the seal and the oil bath 240 reservoir height which includes below the lower bushing, between the upper and lower bushing and above the upper bushing. It is also possible that a fork can have 1 long bushing and the air bleed assembly and port passageway could be above or below the 1 long bushing.

In one embodiment, the opening 211 is provided in a similar location in both lower fork tubes. In another embodiment, the opening 211 is located in different locations in both lower fork tubes.

In one embodiment, opening 211 is a small orifice. In another embodiment, opening 211 includes one or more larger venting slots to reduce the air spring affect in the overall fork spring curve.

Referring again to Figure 1A and to Figure 1B, during the assembly of the fork 100, the right upper fork tube 108 is telescopingly coupled with the right lower tube 104. Similarly, the left upper fork tube 114 is telescopingly coupled with the left lower fork tube 118. This assembly causes the fork legs to become a sealed environment.

In one embodiment, the telescoping of the legs is inverted. That is, the right lower tube 104 is telescopingly coupled with the right upper fork tube 108. Similarly, the left lower fork tube 118 is telescopingly coupled with the left upper fork tube 114.

During operation, one or both of right leg 102 and left leg 112 of the fork 100 act as dampers and are subject to compression and rebound loads. In one embodiment, during compression of fork 100, the upper fork assembly 140 moves telescopically further into the lower fork assembly 150. In contrast, during a rebound of fork 100, the upper fork assembly 140 partially withdraws telescopically from the lower fork assembly 150. Here again, in an inverted fork configuration, the orientations and telescopic actions of one or more components may be reversed. For example, during compression of an inverted fork 100, the lower fork assembly 150 moves telescopically further into the upper fork assembly 140. In contrast, during a rebound of the inverted fork 100, the lower fork assembly 150 partially withdraws telescopically from the upper fork assembly 140.

Often, the compression is induced by disparities in the terrain being traversed by a vehicle equipped with the fork 100, by user input, by jumping, dropping, bouncing or the like. The rebound is induced by a spring (e.g. gas spring, mechanical spring, coil or the like). In one embodiment, a spring is located in right leg 102 and acts to store energy during compression of the fork and then release that energy when the disparity is passed. The energy is released in urging the fork legs to elongate axially following the axial compression during which the energy is stored.

In one embodiment, one leg of the fork will include a damper or damper cartridge along with an amount of working fluid (e.g., oil bath 240), and some amount of ambient air. If the damper is located within the left leg 112, movement of the upper fork tube 114 relative to the left lower fork tube 118 causes a piston assembly to move axially within the damper body. During a compression stroke, the piston assembly moves downward in the damper body and thereby reduces the volume of the compression chamber. As fluid is displaced from the compression chamber, some of it flows through passages and deflects a one-way shim valve to enter the rebound chamber. Some of the displaced fluid flows through an orifice into a reservoir. The resistance to movement of fluid from the compression chamber, through passages (and shim valve on piston) and the orifice provide compression damping for the suspension unit in which the damper cartridge is included.

Normally, the ambient air within the sealed environment of the assembled fork 100 will be equivalent to the pressure of the ambient air at the location of assembly. By having the air pressure within the assembly at static (unloaded) extension be substantially equal to ambient exterior air pressure ensures that there is no net differential pressure acting across the lower leg seal 265.

Suspension forks are often ridden at many different elevations, however, and the ambient air pressure reduces (decreases) as a function of increasing elevation (and increases at lower elevations).

For example, air pressure above sea level can be calculated as:

$$p = 101325(1 - 2.2577 \cdot 10^{-5} \, h)^{5.25588}$$

Where p=pressure absolute and h=altitude above sea level.

Therefore, if the fork 100 is assembled at sea level, the pressure of the ambient air sealed within the fork 100 will also be at sea level pressure (approximately 101,325 Pa or 14.7 pounds per square inch (psi) or 1013.25 millibars).

Deleteriously, when the vehicle is used at altitude, there can be a significant differential between the two air pressures (e.g., the ambient air pressure and the internal fork air pressure). For example, the typical ambient air pressure at 2,438.4 m (8,000 ft.) elevation would be approximately 26,200 Pa (3.80 psi) lower than the trapped air pressure inside the fork (if that trapped air is at sea level pressure). In another example, the typical ambient air pressure at 3048 m (10,000 ft.) elevation would be approximately 31,716 Pa (4.60 psi) lower than the trapped air pressure inside the fork. (http://www.engineeringtoolbox.com/air-altitude-pressure-d 462.html.)

When a fork is assembled at low elevation and then taken to ride at high elevations, the "sealed lower leg air pressure", because of the now decreased high elevation exterior air pressure and corresponding differential pressure, adds pressure and load to the lower oil control lip of the seal which creates significantly higher axial friction in a telescoping suspension fork.

It should also be appreciated that other conditions may cause a difference between the internal pressure within the upper leg/lower leg assembly and the ambient air pressure. These conditions include, but are not limited to, heating of the fork due to, for example, sunlight shining on the fork, frictional heating of the fork during use thereof, and the like.

One ingenious solution to resolving the pressure differential was the incorporation of a manual air bleed button with the lower fork leg. By pushing the air bleed button, a pathway was opened to the sealed air that allowed the pressure of the air within the lower leg to equalize with the ambient pressure for the given location, thereby restoring the lower-friction fork.

In one embodiment, instead of using a manual air bleed button, the disclosed automatic air pressure equalization features allow the difference in pressure between the ambient pressure (e.g., the pressure outside of fork 100) and the internal pressure (e.g., the pressure within the lower leg of fork 100) to automatically and continuously attempt to substantially equalize.

Although some examples provided herein refer to reducing the internal pressure to approach the ambient pressure, embodiments are similarly able to substantially equalize the internal pressure with the ambient pressure when the ambient pressure exceeds the internal pressure. Hence, the automatic air pressure bleed is capable of substantially equalizing the pressure between the ambient pressure and the internal pressure regardless of which pressure (ambient and internal) is greater.

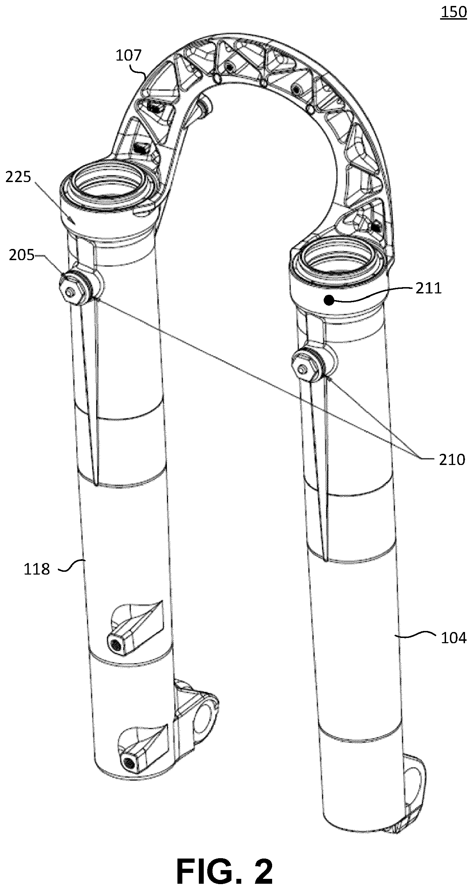

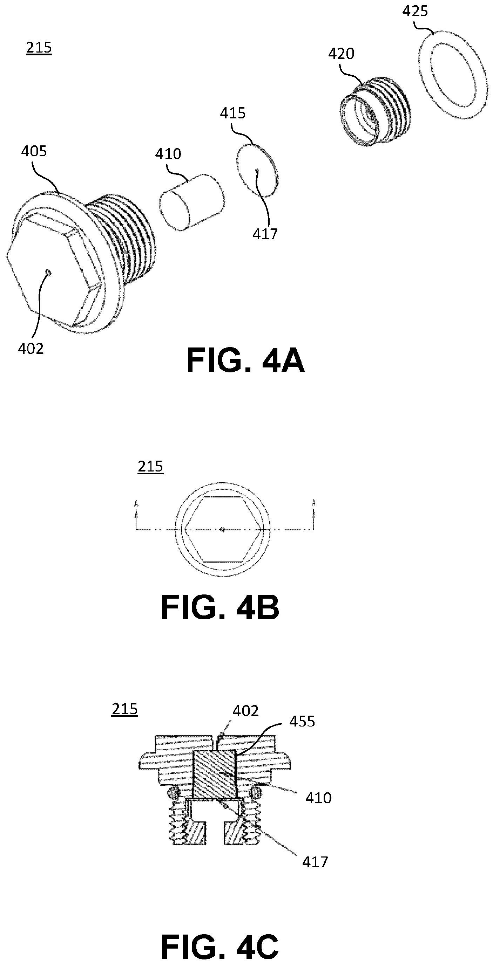

With reference now to Figure 2, a perspective view of the lower fork assembly 150 is shown in accordance with an embodiment. In one embodiment, the automatic air bleed assembly 205 (described in further detail in Figures 4A-6C) is shown in pressure relief ports 210. In one embodiment, the automatic air bleed assembly 205 is used in place of button activated air bleeder assemblies.

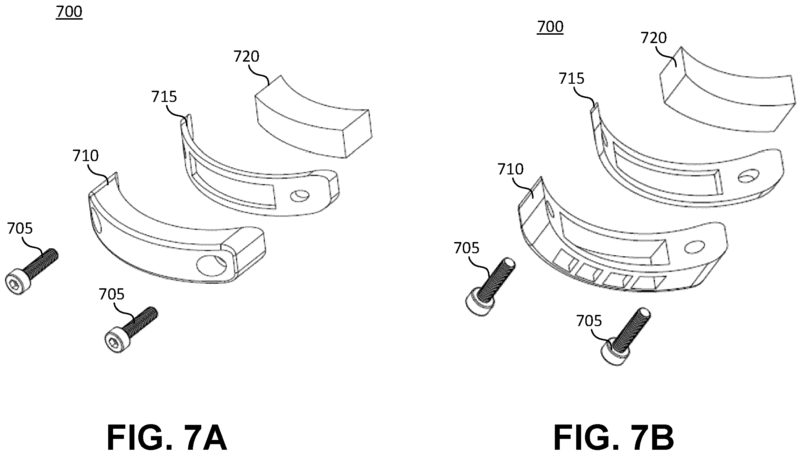

In one embodiment, the bolt on automatic air bleed valves (described in further detail in Figures 7A-8B) are attached to the surface 225 of the lower fork legs about opening 211 below the lower leg seal bore. In one embodiment, opening 211 is located proximate the lower leg seal 265 such as, by the upper bushing 260 or behind foam ring 255. Opening 211 is in communication with the gas (e.g., air) within the lower tube while the bulk of the oil bath 240 is located there below.

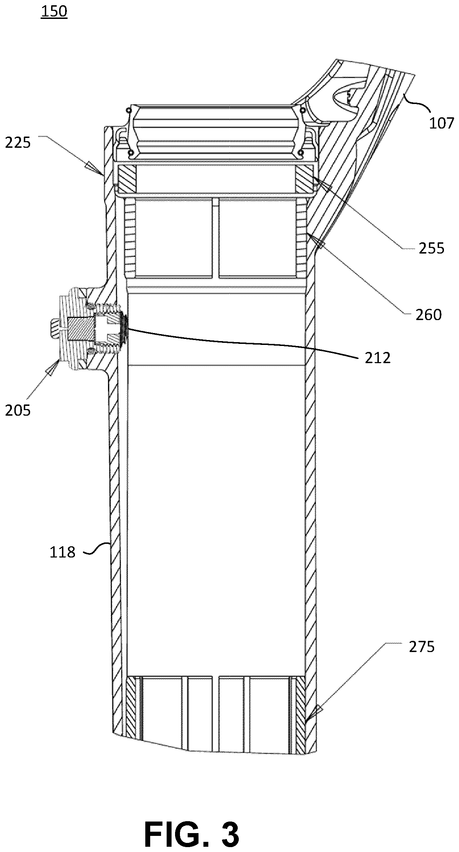

Referring now to Figure 3, a side section view of a portion of the lower fork assembly 150 is shown in accordance with an embodiment. In one embodiment, the opening 212 in the lower fork tube and the automatic air bleed assembly 205 are located higher up on the back side (as oriented with respect to the front wheel of the vehicle) of the lower fork tube(s) in a location that is less vulnerable to damage, flying debris, water, and the like.

In one embodiment, the opening 212 in the lower fork tube and the automatic air bleed assembly 205 are located on the front side (as oriented with respect to the front wheel of the vehicle) of the lower fork tube(s). In one embodiment, the automatic air bleed assembly 205 is designed to replace a manual button type air bleed valve.

In one embodiment, the opening 212 in the lower fork tube is formed in the location where a fender attachment is provided. For example, the fender attachment can include 2 fasteners at the front and 2 screws at the back of the fork brace. In one embodiment, some of the fender attachment holes are bored to provide the opening 212 and the automatic air bleed assembly 205 are threaded into the existing fender attachment openings. In one embodiment, if a fender is also added, two automatic air bleed assemblies are used in conjunction with 2 screws at the back of the fork brace to provide a strong, clean, stable fastening method for a fender.

In one embodiment, the automatic air bleed assembly 205 disclosed herein has oleophobic and hydrophobic properties to prevent the fluid of oil bath 240 from leaking out of the opening 212 in the lower fork tube while also preventing water or other particles from entering into the internal fork environment.

In other words, when excessive air pressure in the fork 100 is relieved through the automatic air bleed assembly 205, the oil bath does not spray/leak out. Similarly, when the vehicle traverses through the environment, is washed, subject to rain, or the like, the external water, dirt, and the like does not make its way into the internal fork environment.

In one embodiment, there may be more than one opening 211 (or vent hole) in lower fork assembly 150. For example, a first vent hole and a corresponding first air bleed assembly could be used to transfer air "out of" the interior of the fork 100, while a second vent hole and a corresponding second air bleed assembly could be used to transfer air "into" the interior of the fork 100.

With reference now to Figure 4A, an exploded view of the automatic air bleed valve 215 of Figure 3 is shown in accordance with an embodiment. In one embodiment, automatic air bleed valve 215 includes a topcap 405 (or housing), an air bleed 410, a shim 415, a shim retainer 420, and a topcap seal 425 (or housing seal). Figure 4B is a top view of the automatic air bleed valve 215 with a cross-section A-A. Figure 4C is a side section view of the automatic air bleed valve 215 along the cross-section A-A of Figure 4B.

With reference now to Figures 4A and 4C, in one embodiment, topcap 405 will include a bore 455 formed therein to allow the air bleed 410 to fit at least partially therein. In one embodiment, the bore 455 is cylindrical. In another embodiment, the bore 455 could be another shape such as a square, semicircle, etc. In one embodiment, bore 455 could be formed into the lower leg and a sealed cap could be press-fit or assembled to the lower leg and retained via a retaining ring.

In one embodiment, the topcap 405 will have an opening 402 therethrough to provide an air path from the exterior side of the topcap 405 to the bore 455 formed therein. In one embodiment, the opening 402 and the bore 455 will provide an airpath that traverses the topcap 405.

The air bleed 410 is an air permeable material (or combination of materials) with oleophobic-hydrophobic properties. In one embodiment, it is an open cell foam. In one embodiment, an oleophobic material is used on the side facing the fork 100 and is used to repel /stop/hinder the oil of oil bath 240 from coming out through the opening 212 in the lower fork tube.

In contrast, a hydrophobic material is used on the side facing away from the fork 100 and is used to repel /stop/hinder water from entering into the fork assembly through the opening 212. For example, during rain, dusty terrain, water crossings, splashes, vehicle washing, and the like.

In one embodiment, air bleed 410 is an open cell foam with oleophobic properties with one portion including a coating that imparts hydrophobic properties. In another embodiment, air bleed 410 is an open cell foam with hydrophobic properties with one portion including a coating that imparts oleophobic properties.

In another embodiment, air bleed 410 is a combination or composition of materials where the exterior facing side includes a material with hydrophobic properties and the fork facing side includes a material with oleophobic properties.

In one embodiment, there may be additional materials in the air bleed 410 such as a middle layer (or plurality of middle layers) between the material with hydrophobic properties and the material with oleophobic properties to provide a desired thickness, compressibility, incompressibility, firmness, and the like.

In one embodiment, the middle layer (or plurality of middle layers) is a lightweight material and/or structure (e.g., scaffold, hollow, less dense, etc.) that can provide a lighter weight air bleed that still meets the form factor requirements.

For example, in one embodiment, a waterproof expanded PTFE material is insert molded into a surrounding plastic frame. In one embodiment, the waterproof framed disc is placed in the bottom of the topcap bore 455 and held in place by air bleed 410 or placed in the topcap bore 455 before or after the shim 415 and clamped in position by the shim retainer 420.

Shim 415 provides a rear surface for the air bleed 410. In one embodiment, the shim 415 is a metal. In another embodiment, the shim 415 is composite, plastic, or the like. The shim 415 includes a bleed orifice 417 (e.g., a hole) to provide an air path therethrough. In one embodiment, the bleed orifice 417 is drilled, punched, or the like. In one embodiment, the bleed orifice 417 provides a fluid communication to the lower leg air-oil reservoir of the lower fork assembly 150.

In one embodiment shim retainer 420 is threaded. In one embodiment, shim retainer utilizes another type of retaining mechanism. In one embodiment, shim retainer 420 is inserted within the bore 455 of the topcap 405 to retain shim 415 and air bleed 410 therein. As the shim retainer 420 is installed within the bore 455 it can be tightened to provide a pressure against the shim 415. In so doing, the shim 415 will provide a compressive force to the air bleed 410 within the bore 455. Since at least a portion of the air bleed 410 is compressible, when the shim 415 provides the compressive force to the air bleed 410 within the bore 455, the air bleed 410 will fill and provide a seal within the bore 455 of the topcap 405. The air bleed 410 also can be specifically made with a larger OD compared to the bore 455. When the air bleed 410 is press-fit into the bore, the outer cylinder provides additional benefit of sealing and not seeping oil or air in either direction.

The air bleed topcap seal 425 is used to provide a fluid seal between the automatic air bleed valve 215 and the body of the lower fork assembly 150.

Thus, when installed, the automatic air bleed valve 215 will provide an air path that will remain open and allow the air pressure within the lower fork assembly 150 to equalize with the ambient air pressure while providing a water-oil seal to keep water out of the fork assembly and oil within the fork assembly.

Moreover, when the air is trapped or sealed within a fork 100, during repeated or long suspension travel of the fork 100, a significant amount of air pressure can build up. This will alter the spring curve of the fork. In one embodiment, the size of the opening 402 and bleed orifice 417 that is utilized will provide different performance characteristics. For example, if opening 402 and bleed orifice 417 are larger opening(s) this will reduce the ability of the air pressure within the lower fork to build up and instead it will remain at the ambient air pressure.

However, in some use cases, the fork 100 may be designed with the expectation of a build up in the internal air pressure to provide additional progression to the overall spring curve of the suspension fork. For example, if one or both of the opening 402 and bleed orifice 417 are a small pinhole (or pinholes) they will allow the air pressure within the lower fork to equalize with the ambient air pressure while also allowing the spring curve to be altered during progressive fork operation.

That is, the pin hole opening(s) will allow the air pressure within the lower fork assembly 150 to increase progressively in the short term, such as during progressive fork stroke events or longer fork travel. For example, when the increase in the air pressure within the lower fork assembly 150 builds faster than the air can escape through one or both of the opening 402 and bleed orifice 417. As such, there will be short-term alterations in the spring curve (to include firmer damping characteristics) until the internal fork air is able to equalize with the ambient pressure via the pinhole opening.

In one embodiment, due to the variable nature of the components, there is no clocking required during the assembly or utilization of the automatic air bleed valve 215.

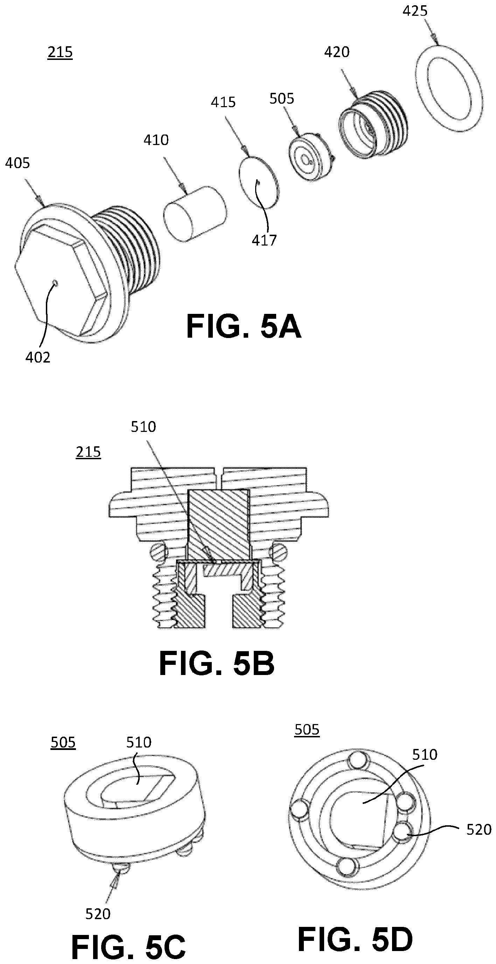

With reference now to Figure 5A, an exploded view of the automatic air bleed valve 215 of Figure 3 with an additional and optional oil seepage valve 505 is shown in accordance with an embodiment. In one embodiment, the components of automatic air bleed valve 215 are similar to those described in the discussion of Figures 4A-4C and as such, are not repeated herein, but instead are incorporated by reference in their entirety.

In one embodiment, the oil seepage valve 505 includes a flexible material such as rubber, silicone, or the like. In one embodiment, the oil seepage valve 505 is located between the shim 415 and the shim retainer 420. Figure 5B is a side section view of the automatic air bleed valve 215 with the optional oil seepage valve 505. Figure 5C is a top perspective view of the optional oil seepage valve 505 and Figure 5D is a bottom perspective view of the optional oil seepage valve 505.

With reference now to Figures 5A-5D, in one embodiment, optional oil seepage valve 505 is a reed valve. In one embodiment, optional oil seepage valve 505 is used to prevent an oil leak during fork operation (as needed). Optional oil seepage valve 505 will include at least some compressible material such as flexible features 520 and a cantilever feature 510 (e.g., a diving board shape, tongue, or the like).

In one embodiment, the optional oil seepage valve 505 has flexible features 520 such as bumps, legs, feet, posts, waves, other geometric shapes, or the like. In general, the flexible features 520 are located on the shim retainer 420 facing side and provide an amount of compressibility to the optional oil seepage valve 505. For example, the flexible features 520 are used to handle any manufacturing discrepancies such as, manufacturing and/or assembly tolerance range problems and ensure the optional oil seepage valve 505 will seat properly when the automatic air bleed valve 215 is assembled and utilized. It should be appreciated that there may be more or fewer flexible features 520. Moreover, the arrangement of the flexible features 520 is equally distributed in one embodiment, and in another embodiment may be distributed unequally, randomly, in a pattern, or the like.

With respect to cantilever feature 510, when installed and while the fork 100 is at rest, the cantilever feature 510 of optional oil seepage valve 505 will leave a small gap between itself and the bleed orifice 417 of the shim 415. In another embodiment, the optional oil seepage valve 505 can be positioned in the assembly over any of the "in series" air flow passageways.

In so doing, while the vehicle is at rest, the gap between the cantilever feature 510 and the orifice will allow the inner fork air to equalize with the ambient air. However, when the fork 100 is cycled, the air flow will flex the elastomer based optional oil seepage valve 505 and close off flow over the orifice. In other words, as the fork 100 is compressed (including low-speed fork operation) the outward air flow of the air within the lower fork assembly 150 will push against the cantilever feature 510 causing the cantilever feature 510 to close the gap and provide a seal against the bleed orifice 417 of the shim 415 to prevent outward fluid leaks.

In one embodiment, due to the variable nature of the components, there is no clocking required during the assembly and operation of the automatic air bleed valve 215.

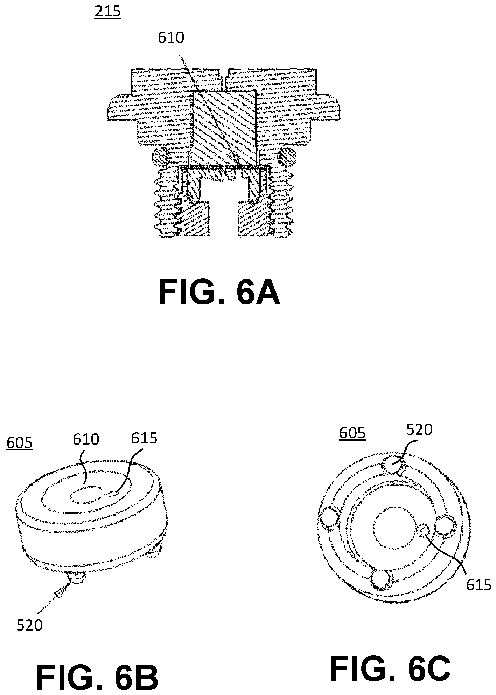

Figure 6A is a side section view of the automatic air bleed valve 215 with an optional oil seepage valve 605. Figure 6B is a top perspective view of the optional oil seepage valve 605 and Figure 6C is a bottom perspective view of the optional oil seepage valve 605. For purposes of clarity, the structures of optional oil seepage valve 605 that are similar to the optional oil seepage valve 505 are not repeated but are instead incorporated by reference in their entirety.

With reference now to Figures 6A-6C, in one embodiment, the oil seepage valve 605 includes a flexible material such as rubber, silicone, or the like. In one embodiment, the optional oil seepage valve 605 is a domed valve. In one embodiment, optional oil seepage valve 605 is used to prevent an oil leak during fork operation (as needed). Optional oil seepage valve 605 will include at least some compressible material such as flexible features 520. However, instead of the cantilever feature 510 of optional oil seepage valve 505, optional oil seepage valve 605 will have a domed 610 shim facing side with an off-center air bleed opening 615.

In general, the optional oil seepage valve 605 will work similar to the optional oil seepage valve 505. That is, when installed and while the fork 100 is at rest, the domed 610 feature will leave a small gap between itself and the bleed orifice 417 of the shim 415 such that there will be air flow communication through the optional oil seepage valve 605 using the off-center air bleed opening 615. However, in low-speed fork operation, the outward air flow will cause the domed 610 feature to close the gap and provide a seal against the orifice 417 on the shim 415 thereby preventing any outward fluid leaks.

Once again, due to the variable nature of the components, there is no clocking required during the assembly of the automatic air bleed valve 215.

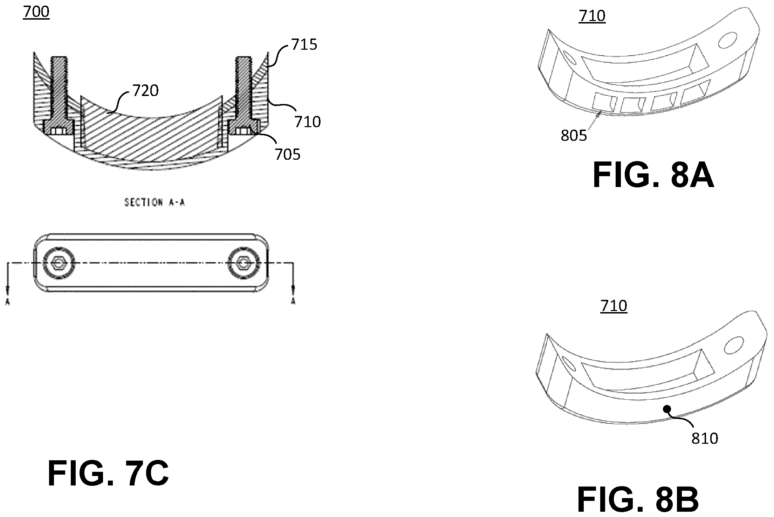

Referring now to Figure 7A an exploded front perspective view of an automatic air bleed valve 700 shown in accordance with an embodiment. Figure 7B is an exploded rear perspective view of the automatic air bleed valve 700 of Figure 7A. Figure 7C is a section view of the automatic air bleed valve 700 configuration of Figure 7A.

In one embodiment, automatic air bleed valve 700 of Figures 7A-7C, is an "open air bleeder" assembly. Automatic air bleed valve 700 includes two fasteners 705 (such as screws, or the like), an air bleed housing cover 710, an air bleed housing seal 715, and an air bleed 720.

In one embodiment, the automatic air bleed valve 700 is mounted about the opening 211 by the upper bushing 260 (as shown in Figure 1B).

Air bleed housing cover 710 is a plastic, metal, fiberglass, composite material that is molded, cast, milled, machined, or the like. Air bleed housing seal 715 is an elastomer, rubber, or the like. Air bleed 720 is similar to air bleed 410 and as such, the discussion thereof is incorporated by reference herein in its entirety.

With reference now to Figure 8A, a perspective view of the air bleed housing cover 710 is shown with one or more large vents 805 to allow an increased air flow rate through the air bleed housing cover 710, the air bleed 720, and the opening 211. In one embodiment, by having one or more large vents 805, the air flow in and out of the fork 100 is maximized. In one embodiment, at least one vent 805 is located at a bottom surface of the air bleed housing cover 710. An advantage of the large vents would be to reduce the added air spring effect from the air in the lower leg.

Alternatively, as shown in Figure 8B, a perspective view of the air bleed housing cover 710 with at least one small orifice 810 is shown. In one embodiment, the small orifice 810 is used to minimize the rate of air flow in and out of the fork 100.

In one embodiment, the positioning of the openings in air bleed housing cover 710 and opening 211 have a separation distance designed to maximize the effectiveness of the "oleophobic-hydrophobic" air bleed 720. In one embodiment, the waterproof expanded PTFE material, as described herein, is used to increase the water resistance of the automatic air bleed valve 700. In one embodiment, the PTFE material or a similar semi-permeable layer, could in and of itself be a "choking orifice" or used in conjunction with an orifice to slowly allow differential pressure to equalize but would not support a flow rate associated with a fork in action.

In another embodiment, instead of having the automatic air bleed valve 700 bolt onto the outside of the fork 100, the air bleed 720 and housing cover 710 is installed within the lower fork assembly 150 behind opening 211 (such as in place of foam ring 255 of Figure 1B) to provide a similar operating air bleed valve that would provide an air path to allow the air pressure within the lower fork assembly to equalize with the ambient air pressure while providing a water-oil seal to keep water out of the fork assembly and oil within the fork assembly.

The foregoing Description of Embodiments is not intended to be exhaustive or to limit the embodiments to the precise form described. Instead, example embodiments in this Description of Embodiments have been presented in order to enable persons of skill in the art to make and use embodiments of the described subject matter. Moreover, various embodiments have been described in various combinations. However, any two or more embodiments can be combined. Although some embodiments have been described in a language specific to structural features and/or methodological acts, it is to be understood that the subject matter defined in the appended claims is not necessarily limited to the specific features or acts described above. Rather, the specific features and acts described above are disclosed by way of illustration and as example forms of implementing the claims and their equivalents.

## Claims

1.  A front fork assembly comprising:

    an inner fork tube and an outer fork tube, wherein the inner fork tube and outer fork tube are configured to engage telescopically, and wherein the outer fork tube contains an oil bath lubrication within an area thereof;
    a seal configured for closing a gap between the inner fork tube and the outer fork tube when they are telescopically engaged, such that the oil bath lubrication within the outer fork tube is prevented from leaking out from the outer fork tube;

    a fluid passage disposed between an interior of the outer fork tube and an exterior of the outer fork tube, wherein the fluid passage is located below the seal; and
    an automatic air bleed assembly disposed on the outer fork tube, said automatic air bleed assembly comprising:

        a housing coupled to the fluid passage, said housing comprising at least one bore and at least one orifice; and
        a material with oleophobic and hydrophobic properties located within said bore.

2.  The front fork assembly of Claim 1, wherein said housing is a topcap, or an air bleed housing cover that optionally further comprises at least one vent or at least one orifice or a combination thereof located at a bottom surface of the air bleed housing cover.

3.  The front fork assembly of any preceding Claim 1 or 2, wherein said automatic air bleed assembly further comprises:

        a shim configured to press said material into said bore, said shim comprising a bleed orifice;
        a shim retainer to couple with said bore of said housing and provide a pressure against said shim; and
        a housing seal to seal said automatic air bleed assembly with said outer fork tube about said fluid passage.

4.  The front fork assembly of Claim 3, wherein said automatic air bleed assembly further comprises:
    an oil seepage valve coupled between said shim and said shim retainer, said oil seepage valve comprising:

        a flexible feature on a shim retainer facing side to provide an amount of compressibility to mitigate manufacturing discrepancies, and optionally wherein said flexible feature is selected from at least one member of a group consisting of: bumps, legs, feet, posts, waves, and other geometric shapes; and
        a fluid passage blocking feature configured to leave a gap between itself and the bleed orifice of said shim while said suspension fork is at rest and block said bleed orifice of said shim when said suspension fork is compressed or going through a compression stroke, and optionally wherein said fluid passage blocking feature comprises a cantilever feature or a dome with an opening therethrough, said opening offset from a center of said dome.

5.  The front fork assembly of any preceding Claim, further comprising:

    at least one bushing coupled with said fork; and said air bleed assembly and said fluid passage are located above or below said at least one bushing.

6. The front fork assembly of any preceding Claim, wherein said automatic air bleed assembly is configured to prevent substantially all liquid outside of the outer fork tube from leaking into the outer fork tube while allowing said air inside the outer fork tube to equalize with air exterior of the outer fork tube.

7. The front fork assembly of any preceding Claim, wherein said automatic air bleed assembly is adapted to be screwed in or bolted on to said outer fork tube.

8. The front fork assembly of any of Claims 1 to 6, wherein said housing is formed into a leg of said outer fork tube and a sealed cap is coupled to said outer fork tube and retained via a retaining ring.

9. The front fork assembly of any preceding Claim, wherein said automatic air bleed assembly is positioned anywhere between said seal and a top of an oil bath reservoir within said outer fork tube.

10. The front fork assembly of Claim 1, wherein said automatic air bleed assembly further comprises: a waterproof material disposed into a surrounding frame, said waterproof material located within said at least one bore of said housing, and optionally wherein said waterproof material comprises a waterproof material insert molded into the surrounding frame.

11. The front fork assembly of any preceding Claim, wherein said at least one orifice comprises a pin hole size orifice.

12. The front fork assembly of any preceding Claim, wherein there is no clocking required for any components of said automatic air bleed assembly.

13. An automatic air bleed assembly comprising:

    a housing for coupling to a fluid passage, said housing comprising at least one bore and at least one orifice; and
    a material with oleophobic and hydrophobic properties located within said bore.

14. A method of manufacturing an outer fork tube for a front fork assembly, said method comprising:

    forming an air passage through an outer fork tube;
providing an automatic air bleed assembly on the outer fork tube covering said air passage, said automatic air bleed assembly comprising:

    a housing coupled to the air passage, said housing comprising at least one bore and at least one orifice; and
    a material with oleophobic and hydrophobic properties located within said bore.

15. A vehicle comprising a front fork assembly as claimed in any of Claims 1 to 12.

# FIG. 1A

150

## FIG. 1B

**FIG. 2**

150

**FIG. 3**

215

425

420

415

405

410

417

402

# FIG. 4A

215

A ──── A

# FIG. 4B

215

402

455

410

417

# FIG. 4C

**FIG. 5A**

**FIG. 5B**

**FIG. 5C**

**FIG. 5D**

215

610

# FIG. 6A

605    610    615

520

# FIG. 6B

605    520

615

# FIG. 6C

700

720

715

710

705

705

**FIG. 7B**

700

720

715

710

705

705

**FIG. 7A**

EP 4 470 896 A1

700

715

720

715

710

705

SECTION A-A

**FIG. 7C**

710

805

**FIG. 8A**

710

810

**FIG. 8B**

Europäisches
Patentamt

European
Patent Office

Office européen
des brevets

**EUROPEAN SEARCH REPORT**

Application Number

EP 24 17 9360

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/411007 A1 (DUNLAP III CHARLES [US] ET AL) 29 December 2022 (2022-12-29) * the whole document * | 1-15 | INV. B62K25/08 F16F5/00 F16F9/00 F16K24/00 |
| | ----- | | |

TECHNICAL FIELDS
SEARCHED      (IPC)

B62K
F16K
F16F

The present search report has been drawn up for all claims

| Place of search | Date of completion of the search | Examiner |
|---|---|---|
| The Hague | 4 October 2024 | Baeza Félez, Lluís |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 9360

This annex lists the patent family members relating to the patent documents cited in the above-mentioned European search report.
The members are as contained in the European Patent Office EDP file on
The European Patent Office is in no way liable for these particulars which are merely given for the purpose of information.

04-10-2024

| Patent document cited in search report | Publication date | Patent family member(s) | Publication date |
|---|---|---|---|
| US 2022411007 A1 | 29-12-2022 | CN 115503862 A | 23-12-2022 |
| | | DE 102022114892 A1 | 29-12-2022 |
| | | TW 202300386 A | 01-01-2023 |
| | | US 2022411007 A1 | 29-12-2022 |

EPO FORM P0459

For more details about this annex : see Official Journal of the European Patent Office, No. 12/82

EP 4 470 896 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63505398
- US 67760824
- US 6135434 A
- US 6360857 B
- US 6415895 B
- US 6296092 B
- US 6978872 B
- US 7308976 B
- US 7374028 B
- US 5190126 A
- US 6581948 B
- US 7273137 B
- US 7261194 B
- US 7128192 B
- US 6604751 B